# EUROPÄISCHE PATENTSCHRIFT

(11) **EP 0 757 887 B1**
(45) Veröffentlichungstag und Bekanntmachung des Hinweises auf die Patenterteilung: **30.05.2001**
(21) Anmeldenummer: 96112411.2
(22) Anmeldetag: 01.08.1996
(51) Int. Cl.: A01D 34/82

(54) **Messer für einen Sichelmäher und Sichelmäher**
Mulching rotary lawn mower blade
Lame broyeuse pour tondeuse à gazon

(30) Priorität: 05.08.1995 DE 19528832
(43) Veröffentlichungstag der Anmeldung: 12.02.1997
(73) Patentinhaber: Tutschka, Alfred, 64546 Mörfelden-Walldorf (DE)
(72) Erfinder: Tutschka, Alfred, 64546 Mörfelden-Walldorf (DE)
(74) Vertreter: Luderschmidt, Schüler & Partner GbR

(56) Entgegenhaltungen:
- EP-A- 0 498 294
- EP-A- 0 514 209
- WO-A-92/02121
- DE-A- 4 034 978
- DE-A- 4 120 278
- GB-A- 2 077 564
- US-A- 2 663 984
- US-A- 3 134 212
- US-A- 5 094 065

## Beschreibung

Die Erfindung betrifft ein Messer für einen Sichelmäher mit den Merkmalen des Patentanspruchs 1 und einen Sichelmäher bzw. Luftkissenmäher mit einem derartigen Messer. Ferner bezieht sich die Erfindung auf einen Nachrüstsatz für einen Sichelmäher mit einem derartigen Messer.

Sichelmäher mit einem zweiflügeligen Messer, das in einer nach unten offenen Abdeckung rotiert, sind als Rasenmäher bekannt. Der Antrieb des Messers erfolgt entweder elektrisch oder mittels eines Verbrennungsmotors. Die bekannten Rasenmäher können auf Rollen verfahrbar sein oder sind als sogenannte Luftkissenmäher ausgebildet.

Die Seitenwand der das umlaufende Messer abschirmenden Abdeckung ist bei konventionellen Rasenmähern von einer Auswurföffnung für das Mähgut durchbrochen, die in einen Auffangbehälter zum Sammeln des von dem Messer ausgetragenen Mähguts mündet. Es sind Messer bekannt, die zum Austragen des Mähguts im Bereich ihrer Flügelenden mit Abweiselementen versehen sind, die sich über die Umlaufebene des Messers erheben und das abgeschnittene Mähgut beim Umlauf des Messers mitnehmen und durch die Auswurföffnung der topfartigen Abdeckung herausbefördern.

Der aus DE 40 34 978 A1 bekannte Sichelmäher, insbesondere Rasenmäher, ist mit einem zweiflügeligen Messer ausgerüstet, das innerhalb einer Abdeckung rotiert, deren Wandung einen den Umlaufkreis des Messers vollständig umschließenden Zylinder bildet. An seinen in Umlaufrichtung rückseitigen Längskanten ist das Messer zumindest im Bereich der Flügelenden mit Abweiselementen versehen, die an dem einen Flügelende nach oben und an dem anderen Flügelende nach unten über die Messerebene vorstehen. Die entgegengesetzte Ausbildung der Abweiselemente an den beiden Flügelenden soll bewirken, daß abgeschnittenes Mähgut von dem einen Abweiser nach oben und von dem anderen Abweiser nach unten gefördert wird. Dabei wird das Mähgut fein zerkleinert, so daß es zur Gründüngung dienen kann. In einer bevorzugten Ausführungsform sind die Messerflügel mit aus der Umlaufebene des Messers herausgeformten U-förmigen Abschnitten versehen, über die sich die Schneiden des Messers erstrecken. In der Praxis hat sich jedoch gezeigt, daß insbesondere bei längerem und feuchtem Mähgut eine ausreichende Pulverisierung des geschnittenen Mähgutes nicht immer erreicht werden kann.

EP 0 300 642 A1 beschreibt ein Messer für einen Sichelmäher mit zwei Flügeln, die an ihren in Umlaufrichtung vorderen Längskanten mit Schneiden versehen sind. Die Schneiden des bekannten Messers sind in ihren in Umlaufrichtung vorderen Randbereichen jeweils unter Ausbildung eines unterhalb der Ebene des Nabenteils liegenden äußeren Schneidenabschnitts profiliert, an den sich ein in der Ebene des Nabenteils liegender Schneidenabschnitt anschließt. Die Flügelenden des bekannten Messers sind als gegenüber der Umlaufebene des Messers nach oben schräggestellte Leitflächen ausgebildet. Die äußeren Randbereiche der Flügelenden sind jedoch nicht nach oben geneigt, um die Geräuschentwicklung des Messers möglichst gering zu halten.

Die US 5,094,065 beschreibt ein Mulch-Messer mit zwei Flügeln, die sich von einem Nabenteil erstrecken und an ihren vorderen Längskanten mit Schneiden versehen sind. Das Messer weist einen über den Nabenteil hinaus ansteigenden mittleren Abschnitt auf. Ferner ist der Bereich in der Nähe der Flügelenden jeweils als schräggestellte Leitfläche ausgebildet, die ausgehend von den vorderen Längskanten der Messerflügel zu den hinteren Längskanten hin einen ansteigenden Verlauf haben. Der äußerste Schneidenabschnitt ist tiefer als der Nabenteil angeordnet. Das bekannte Messer führt zu einer relativ geringen Mähleistung und weist eine geringe Stabilität auf.

Der Erfindung liegt die Aufgabe zugrunde, ein Messer für einen Sichelmäher zu schaffen, das auch bei längerem und feuchtem Mähgut ausreichende Mähleistungen erbringt und das geschnittene Mähgut nahezu pulverisiert, wobei das Messer eine hohe Stabilität aufweisen soll. Ferner liegt der Erfindung die Aufgabe zugrunde, einen Sichelmäher oder einen Luftkissenmäher mit einer verbesserten Mahlleistung zu schaffen, der das geschnittene Mähgut nahezu pulverisiert. Darüber hinaus liegt der Erfindung die Aufgabe zugrunde, einen Umrüstsatz zu schaffen, der es erlaubt, einen konventionellen Sichelmäher, der eine an einer Seite durchbrochene Abdeckung aufweist, umzurüsten, so daß dieser das Mähgut in nahezu pulverisierter Form nach unten abwirft.

Die Lösung der Aufgaben erfolgt erfindungsgemäß mit den Merkmalen der Patentansprüche 1, 6, 12 bzw. 17.

Das erfindungsgemäße Messer findet vorzugsweise in einem Sichelmäher Verwendung, der eine unterseitig offene topfartige Abdeckung zur Aufnahme des Messers aufweist, deren seitliche Wandung bis unter die Ebene des äußeren Schneidenabschnitts, d.h. die unterste Schnittebene des Messers, reicht und den Umlaufkreis des Messers unter Ausbildung eines Ringspaltes umschließt. Eine besonders wirksame Feinzerkleinerung des Mähguts wird dann erreicht, wenn die Abdeckung des Sichelmähers einen umlaufend geschlossenen Zylinder bildet, d.h. wenn die Abdeckung keine seitliche Auswurföffnung aufweist. Ferner ist von Vorteil, wenn die topfartige Abdeckung an ihrer Oberseite mit einer oder mehreren Belüftungsöffnungen versehen ist. Diese bewirken, daß die infolge der Rotation des Messers von unten in die topfartige Abdeckung angesaugte Luft zumindest teilweise nach oben wieder ausströmen kann. Der untere Rand der Abdeckung des Sichelmähers ist vorteilhafterweise nach innen umgebogen, so daß das Schnittgut besser zurückgehalten wird. Darüber hinaus verhindert der nach innen weisende untere Rand der Abdeckung, daß Steine oder andere Fremdkörper aus der Abdeckung herausgeschleudert werden. Die Abdeckung sollte der Messerkontur derart folgen, daß ein möglichst geringer Zwischenraum bleibt. Dadurch wird verhindert, daß sich geschnittenes Gras in größeren Mengen an der Innenwand der Abdeckung absetzt.

Das erfindungsgemäße Messer kann aber auch in vorteilhafter Weise in Sichelmähern eingesetzt werden, die mehrere nebeneinander angeordnete Aggregate mit jeweils einem innerhalb einer Abdeckung umlaufenden Messer aufweisen, wobei die Abdeckungen benachbarter Messer mit einer Öffnung zum Durchtritt des Mähguts von der einen in die andere Abdeckung versehen sind.

Bei dem erfindungsgemäßen Messer bilden die Schneiden der Messerflügel mehrere Schnittebenen, wobei der äußere, im Bereich der Flügelenden liegende Schneidenabschnitt unterhalb der Ebene des Nabenteils des Messers liegt. An diesen äußeren Schneidenabschnitt schließt sich ein mittlerer Schneidenabschnitt, der sich über die Ebene des Nabenteils hinaus erhebt und ein innerer Schneidenabschnitt an, der in das Nabenteil übergeht. Die Flügelenden des Messers, deren in Umlaufrichtung vordere Längskanten unterhalb der Ebene des Nabenteils liegen, sind als gegenüber der Umlaufebene des Messer schräggestellte Leitflächen ausgebildet, die ausgehend von deren in Umlaufrichtung vorderen Längskante zur hinteren Längskante hin einen ansteigenden Verlauf haben. Die Leitflächen bewirken, daß das von dem äußeren Schneidenabschnitt jedes Messerflügels geschnittene Mähgut angehoben wird und somit mehrfach in den Wirkungsbereich des mittleren und inneren Schneidenabschnitts gelangt mit der Folge, daß eine vielfache Zerkleinerung bis hin zur Pulverisierung des Mähguts stattfindet. Da die in Umlaufrichtung hintere Längskanten der Messerflügel im wesentlichen in- oder oberhalb der Ebene des Nabenteils verlaufen, wird das von den äußeren Leitflächen angehobene und in den Wirkungsbereich des mittleren und inneren Schneidenabschnitts gelangende Mähgut abgeworfen, ohne dabei auf den Boden gedrückt zu werden. Dadurch kann eine wirksame Zerkleinerung des Mähguts erreicht werden. An den Flügelenden in Umlaufrichtung hinter den Schneiden sind zusätzliche Abweiselemente vorgesehen, die in Messerlängsrichtung verlaufen und von dem Messerflügel nach unten und oben abstehen. Diese Abweiselemente erfassen das geschnittene Mähgut und unterstützen den Vorgang der Zerkleinerung. Ferner bewirken die Abweiselemente eine Stabilisierung des umlaufenden Messers.

Während das untere Abweiselement im rechten Winkel auf der Umlaufebene des Messers steht, ist das obere Abweiselement vorteilhafterweise in Umlaufrichtung nach hinten schräg gestellt. Das von dem Ableitelement erfaßte Mähgut wird aufgrund der Schrägstellung nach oben befördert, so daß das Abweiselement als zusätzliches Leitelement dient.

Ein derartiges, mit Abweiselementen versehenes Messer kann in vorteilhafter Weise in Sichelmähern verwendet werden, die mehrere seitlich durchbrochene, topfartige Abdeckungen für die Aufnahme jeweils eines Messers aufweisen. Die Abweiselemente beschleunigen das Mähgut und werfen dieses seitlich ab, so daß das Mähgut aus dem Wirkungsbereich des einen Messers der einen Abdeckung in den Wirkungsbereich des anderen Messers der benachbarten Abdeckung gelangt.

Der erfindungsgemäße Nachrüstsatz für einen konventionellen Sichelmäher besteht aus dem erfindungsgemäßen Messer und einer zylinderförmigen, in das Gehäuse des Sichelmähers passend einsetzbaren Abdeckung sowie Befestigungsmitteln, mit denen die Abdeckung am Gehäuse des Mähers befestigt werden kann. Die Abdeckung umschließt den Umlaufkreis des Messers unter Ausbildung eines Ringspaltes und verhindert, daß das Mähgut durch die bei konventionellen Rasenmähern im allgemeinen vorhandene seitliche Öffnung ausgeworfen wird. Zur Verbesserung des Schnittgutrückhaltes und zur Verhinderung des seitlichen Auswurfes von Steinen oder anderen Fremdkörpern ist der untere Rand der Abdeckung vorteilhafterweise nach innen umgebogen.

Nachfolgend werden mehrere Ausführungsbeispiele der Erfindung unter Bezugnahme auf die Zeichnungen näher erläutert.

Es zeigen:
- Figur 1: eine Ausführungsform des erfindungsgemäßen Messers in der Seitenansicht,
- Figur 2: das Messer von Figur 1 in der Draufsicht,
- Figur 3: eine Ansicht des Messers von Figur 1 aus der Richtung des Pfeils VI,
- Figur 4: einen Rasenmäher mit elektromotorischem Antrieb des Messers in teilweise geschnittener Darstellung,
- Figur 5: einen Schnitt durch die topfartige Abdeckung des Rasenmähers entlang der Linie VIII - VIII von Figur 4,
- Figur 6: einen als Luftkissenmäher ausgebildeten Rasenmäher mit dem erfindungsgemäßen Messer in teilweise geschnittener Darstellung,
- Figur 7: die Abdeckung des erfindungsgemäßen Umrüstsatzes für einen Sichelmäher in der Draufsicht
- Figur 8: einen Schnitt entlang der Linie XI-XI von Figur 7
- Figur 9: einen Sichelmäher mit mehreren Messern in der Ansicht von unten.

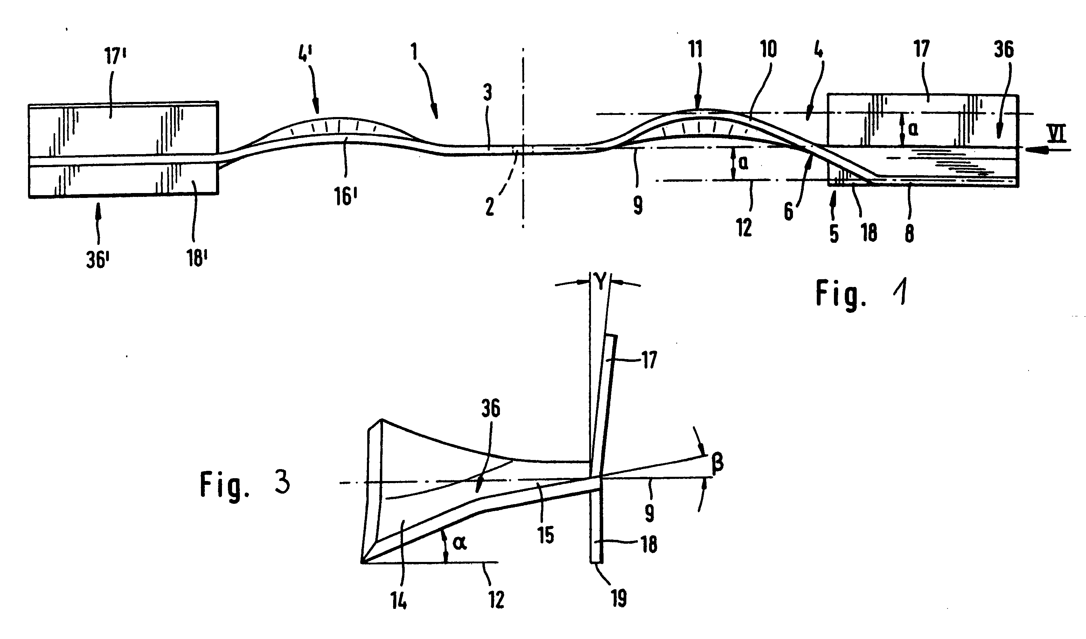

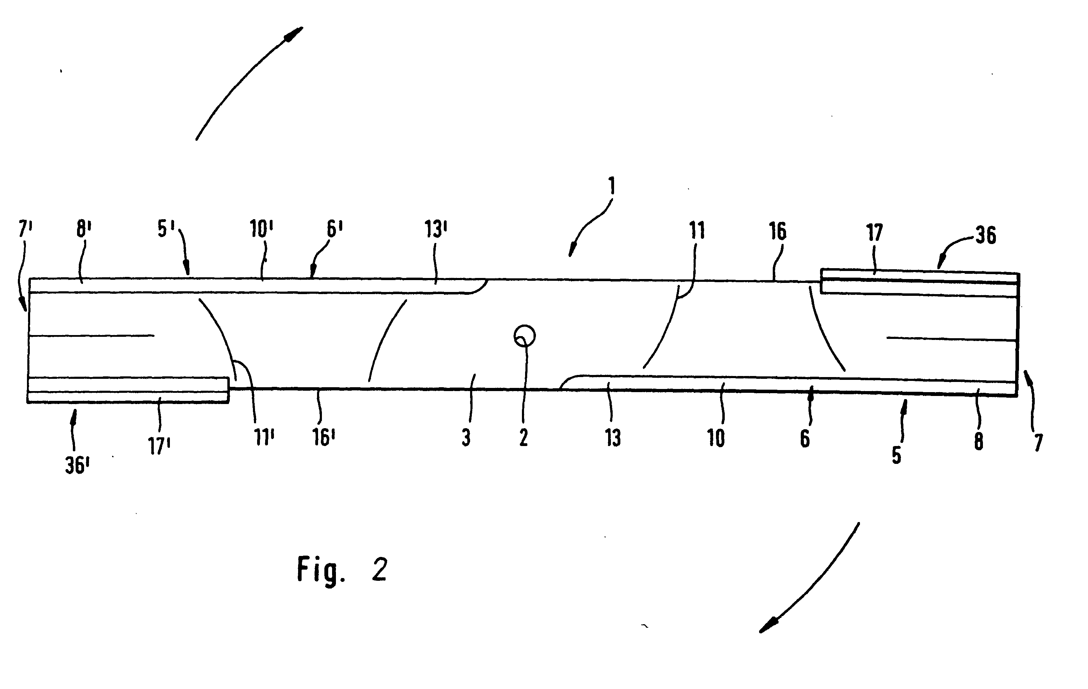

Figur 1 zeigt eine Ausführungsform des erfindungsgemäßen Messers 1 in der Seitenansicht und Figur 2 zeigt das Messer 1 in der Draufsicht. Das Messer 1 besteht aus einem gehärteten, gebogenen Flachstahl mit einer Länge von 40 und einer Breite von 5 cm. Das Messer 1 weist ein mit einer zentralen Bohrung 2 zur Aufnahme einer Befestigungsschraube für die Antriebswelle des Rasenmähers versehenes Nabenteil 3 auf, von dem sich zwei Flügel 4, 4' erstrecken. Die Messerflügel 4, 4' sind an ihren, in Umlaufrichtung vorderen Längskanten 5, 5' jeweils mit einer Schneide 6, 6' versehen, die sich von dem Flügelende 7, 7' bis zu dem Nabenteil 3 des Messers 1 erstreckt. Sie sind unter Ausbildung eines äußeren Schneidenabschnitts 8, 8' profiliert, der sich in Messerlängsrichtung unterhalb der in Figur 1 gestrichelt dargestellten Ebene 9 des Nabenteils 3 etwa über eine Länge von 5 cm erstreckt.

An dem äußeren Schneidenabschnitt 8, 8' schließt sich ein mittlerer Schneidenabschnitt 10, 10' an, der durch eine Ausbauchung 11, 11' des in Umlaufrichtung vorderen Bereichs des Messerflügels 4, 4' gebildet wird. Der mittlere Schneidenbereich 10, 10' erstreckt sich in einem geschwungenen Kurvenverlauf von der Schnittebene 12 des unteren Schneidenabschnitts 8, 8' über die Ebene 9 des Nabenteils 3 hinaus. An den mittleren Schneidenabschnitt 10, 10' schließt sich ein innerer Schneidenabschnit 13, 13' an, der flach ausläuft und in das Nabenteil 3 übergeht.

Der Abstand a zwischen dem oberen Scheitelpunkt der Schneide 6, 6' und der Ebene 9 des Nabenteils 3 entspricht etwa dem Abstand a zwischen der unteren Schnittebene des Messers 1, d. h. der Ebene 12 des äußeren Schneidenabschnitts 8, 8' und der Ebene 9 des Nabenteils 3.

Die Flügelenden 7, 7' des Messers 1 sind als schräg gestellte Leitflächen 36, 36' ausgebildet, die ausgehend von dem äußeren Schneidenabschnitt 8, 8' zur in Umlaufrichtung hinteren Längskante des Messers 1 hin einen ansteigenden Verlauf haben und sich bis etwa auf die Höhe der Ebene 3 des Nabenteils erstrecken.

Figur 3 zeigt das Messer von Figur 1 aus der Richtung des Pfeils VI. Während der in Umlaufrichtung vordere Bereich 14 der Leitflächen 36, 36' einen relativ großen Anstiegswinkel von ca. 20-30° gegenüber der Umlaufebene 9 des Messers hat, knickt der hintere Bereich 15 der Leitflächen 36, 36' ab und schließt mit der Umlaufebene 9 einen Winkel von ca. 10-20° ein.

Im Bereich ihrer in Umlaufrichtung hinteren Längskanten 16, 16' laufen die Messerflügel 4, 4' relativ flach aus. Die hinteren Längskanten 16, 16' der Messerflügel 4, 4' sind nur im Bereich der Ausbauchung 11, 11' leicht nach oben gewölbt. Sie erstrecken sich im wesentlichen auf der Höhe der Ebene 9 des Nabenteils 3.

Das Messer 1 weist seitliche Abweiselemente 17, 17' und 18, 18' auf, die an der Ober- und Unterseite jedes Messerflügels 4, 4' angebracht sind. Die Abweiselemente 17, 17' und 18, 18' sind als flache Platten ausgebildet, die aus dem gleichen Material wie das Messer 1 bestehen und sind mit den Messerflügeln 4, 4' verschweißt. Sie erstrecken sich in Längsrichtung des Messers 1 von den Flügelenden 7, 7' bis etwa zu den mittleren Schneidenabschnitten 10, 10', bzw. ein kurzes Stück darüber hinaus. Das untere Abstreifelement 18 steht senkrecht auf der Umlaufebene des Messers 1, wobei dessen untere Kante 19 mit der Schnittebene 12 des äußeren Schneidenabschnitts 8 abschließt.

Das obere Abstreifelement 17, 17' weist etwa die doppelte Fläche wie das untere Abstreifelement 18, 18' auf. Es ist in Bezug auf eine senkrecht auf der Umlaufebene 9 des Messers stehenden Ebene um einen Winkel γ von ca. 5-20°, vorzugsweise 10°, in Umlaufrichtung nach hinten schräg gestellt. Das obere Abweiselement 17, 17' bewirkt aufgrund seiner Schrägstellung, daß das Mähgut nach oben befördert wird. Insofern dient es als zusätzliches Leitelement.

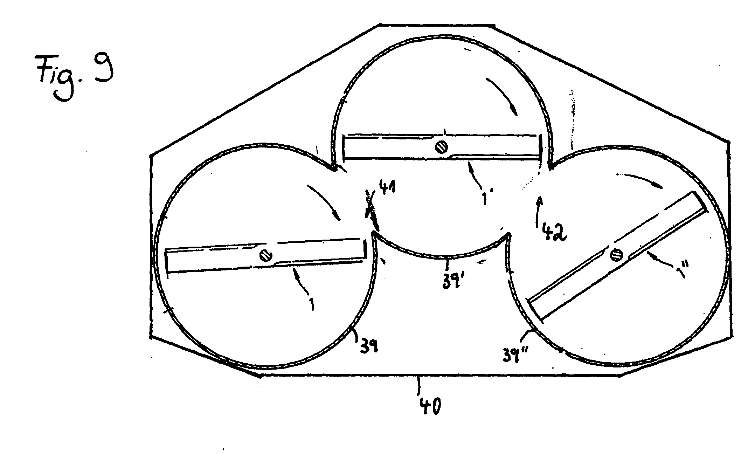

Ein Rasenmäher mit dem erfindungsgemäßen Messer 1 ist in Figur 4 dargestellt. Der Rasenmäher 20 weist ein topfartiges, nach unten offenes Gehäuse 21 zur Aufnahme des Messers 1 auf. An der Oberseite des Gehäuses ist eine Haube 22 aufgesetzt, die einen nur andeutungsweise dargestellten Elektromotor 23 zum Antrieb des Messers einschließt. Der Rasenmäher 20 ist mit je zwei vorderen und hinteren Laufrädern 24, 24' ausgestattet, die an seitlichen Lagerkonsolen gelagert sind und eine Höheneinstellung der topfartigen Gehäuseabdeckung gegenüber dem Boden 25 ermöglichen. Ferner ist an dem Gehäuse ein in Figur 7 nicht dargestellter Führungsholm befestigt, der zum Schieben des Rasenmähers 20 dient.

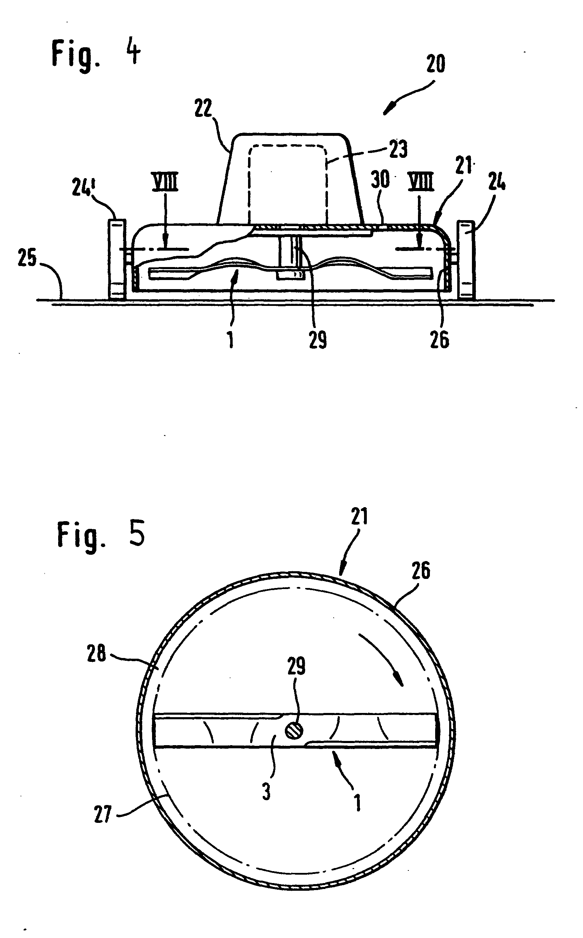

Die Wandung 26 der topfartigen Abdeckung 21 des Rasenmähers 20 umschließt den Umlaufkreis 27 des Messers 1 unter Ausbildung eines schmalen Ringspaltes 28 (Figur 5). Sie weist keine seitliche Auswurföffnung auf und reicht unter die Schnittebene 12 des äußeren Schneidenabschnitts 8 des Messers 1, dessen Nabenteil 3 mit der Antriebswelle 29 des Elektromotors 23 verschraubt ist. An der Oberseite der topfartigen Abdeckung 21 sind umfangsmäßig um die Haube 22 verteilt angeordnete Entlüftungsöffnungen 30 vorgesehen.

Während des Betriebs des Rasenmähers wird das abgeschnittene Gras durch die besondere Profilierung des umlaufenden Messers 1 in Richtung der motorseitigen Wandung der topfartigen Gehäuseabdeckung 21 gefördert und gelangt mehrfach in den Wirkungsbereich des Messers 1, das das abgeschnittene Gras in unterschiedlichen Schnittebenen erfaßt. Das mehrfach zerkleinerte Mähgut gelangt schließlich unter Fliehkraftwirkung innerhalb der topfartigen Abdeckung 21 radial nach außen und fällt in fein zerkleinertem Zustand nahe der das Messer seitlich umschließenden Abdeckung 21 nach unten auf den Boden 25.

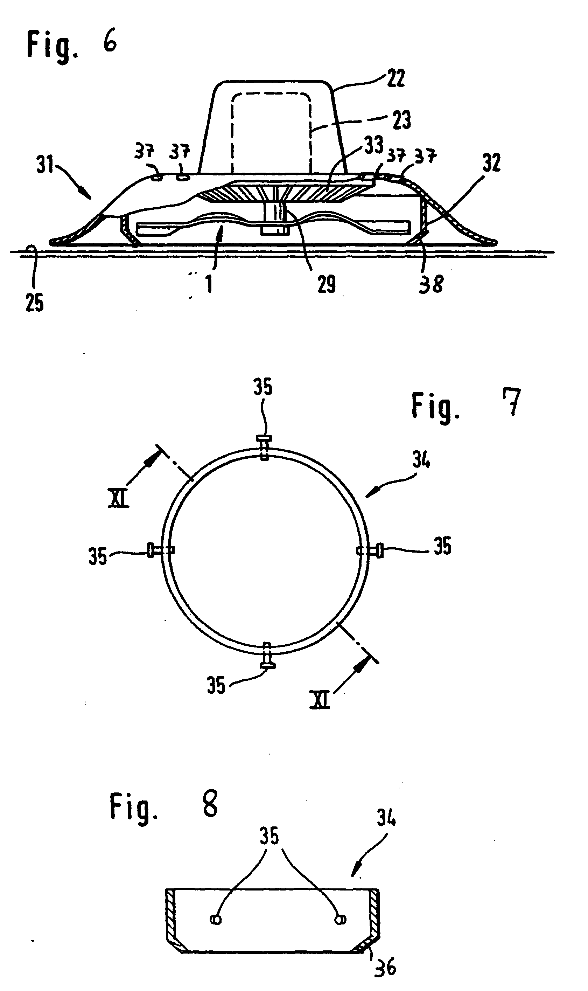

Figur 6 zeigt eine weitere Ausführungsform des erfindungsgemäßen Rasenmähers, wobei die der Ausführungsform gemäß der Figuren 4 und 5 entsprechenden Teile mit den gleichen Bezugszeichen versehen sind. Der Rasenmäher ist als sogenannter Luftkissenmäher ausgebildet. Das nach außen flach auslaufende Gehäuse 31 des Luftkissenmähers umschließt eine zylinderförmige, nach unten offene Abdeckung 32, die das Messer 1 aufnimmt. Mit der Antriebswelle 29 des Elektromotors 23 ist eine oberhalb des Messers 1 in der Abdeckung befindliche Luftschaufel 33 drehfest verbunden, die Luft durch in dem Gehäuse 31 vorgesehene Schlitze 37 ansaugt und für den erforderlichen Auftrieb sorgt. Die zylinderförmige Abdeckung 32 weist einen unteren Rand 38 auf, der nach innen um einen Winkel von ca. 30° umgebogen ist. Der untere Rand 38 der Abdeckung 32 endet etwa auf der Höhe der Messerenden.

Unter Bezugnahme auf die Figuren 7 und 8 wird nachfolgend ein Nachrüstsatz beschrieben, mit dem sich ein konventioneller Rasenmäher nachrüsten läßt, der ein Gehäuse mit einer seitlichen Auswurföffnung aufweist. Der Nachrüstsatz besteht aus dem erfindungsgemäßen Messer 1 und einer zylinderförmigen Abdeckung 34 mit Befestigungsmitteln 35. Die zylinderförmige Abdeckung 34 ist derart ausgebildet, daß sie das Messer 1 unter Ausbildung eines schmalen Ringspaltes umschließt und weist einen unteren Rand 36 auf, der nach innen umgebogen ist. Die Befestigungsmittel 35 sind als Spannschrauben ausgebildet, die umfangsmäßig an der Wandung der zylinderförmigen Abdeckung 34 verteilt angeordnet sind. Die Abdeckung kann in das Gehäuse eines konventionellen Rasenmähers eingesetzt und mittels der Spannschrauben verspannt werden, die sich mit ihren Köpfen an der Gehäuseinnenseite des Rasenmähers abstützen.

Mit der besonderen Ausbildung des erfindungsgemäßen Messers lassen sich selbst bei längerem und feuchtem Mähgut noch ausreichende Mähleistungen erbringen. Das Mähgut wird in nahezu pulverisierter Form abgeworfen und kann als Gründünger auf dem Boden verbleiben.

Figur 9 zeigt einen Sichelmäher mit drei Messern 1, 1', 1'' in der Ansicht von unten. Jedes Messer 1, 1', 1'' rotiert in einer eigenen Abdeckung 39, 39', 39". Die Abdeckungen sind in dem Gehäuse 40 des Sichelmähers nebeneinanderliegend angeordnet, wobei die Abdeckungen benachbarter Messer jeweils eine gemeinsame Öffnung 41, 42 zum Durchtritt des Mähguts aufweisen.

## Patentansprüche

1. Messer für einen Sichelmäher, mit wenigstens zwei Flügeln (4, 4'), die sich von einer Ebene (9) eines die Aufnahme auf einer Antriebswelle des Sichelmähers vermittelnden Nabenteils (3), welche Elbene (9) die Mittelebene des Nabenteils (3) bildet, erstrecken und an ihren, in Umlaufrichtung vorderen Längskanten (5, 5') mit Schneiden (6, 6') versehen sind, die sich ausgehend von den Flügelenden (7, 7') bis zu dem Nabenteil (3) des Messers erstrecken und in ihren in Umlaufrichtung vorderen Randbereichen jeweils derart ausgebildet sind, daß sie einen äußeren Schneidenabschnitt (8, 8') aufweisen, an den sich ein über die Ebene (9) des Nabenteils (3) hinaus ansteigender mittlerer Schneidenabschnitt (10, 10') anschließt, der in einen in die Ebene (9) des Nabenteils (3) abfallenden inneren Schneidenabschnitt übergeht, wobei die in Umlaufrichtung hinteren Längskanten (16, 16') der Messerflügel im wesentlichen in oder oberhalb der Ebene (9) des Nabenteils verlaufen, die Flügel (4,4') im Bereich der Flügelenden (7, 7') als gegenüber der Umlaufebene des Messers schräggestellte Leitflächen (36, 36') ausgebildet sind, die ausgehend von den in Umlaufrichtung vorderen Längskanten (5, 5') der Messerflügel (4, 4') zu den hinteren Längskanten (16, 16') hin einen ansteigenden Verlauf haben und der äußere Schneidenabschnitt (8, 8') derart profiliert ist, daß dieser unterhalb der Ebene (9) des Nabenteils (3) liegt, **dadurch gekennzeichnet**, daß im Bereich der Flügelenden (7, 7') in Umlaufrichtung hinter den Schneiden (6, 6') in Messerlängsrichtung verlaufende Abweiselemente (17, 17'; 18, 18') vorgesehen sind, die sich von den Messerflügeln (4, 4') nach oben und unten erstrecken.

2. Messer nach Anspruch 1, **dadurch gekennzeichnet**, daß die sich nach unten erstreckenden Abweiselemente (18, 18') senkrecht auf der Umlaufebene (9) des Messers stehen und daß die sich nach oben erstreckenden Abweiselemente (17, 17') gegenüber einer senkrecht auf der Umlaufebene (9) stehenden Ebene in Umlaufrichtung nach hinten schräg gestellt sind.

3. Messer nach Anspruch 1 oder 2, **dadurch gekennzeichnet**, daß sich die unteren Abweiselemente (18, 18') bis zu der Schnittebene (12) der äußeren Schneidenabschnitte (8, 8') erstrecken.

4. Messer nach einem der Ansprüche 1 bis 3, **dadurch gekennzeichnet**, daß die Flächen der oberen Abweiselemente (17, 17') größer als die Flächen der unteren Abweiselemente (18, 18') sind.

5. Messer nach einem der Ansprüche 1 bis 4, **dadurch gekennzeichnet**, daß der in Umlaufrichtung hintere Bereich (15) der Leitflächen (36, 36') eine geringere Steigung als der vordere Bereich (14) aufweist.

6. Sichelmäher mit mindestens einem Messer nach einem der Ansprüche 1 bis 5.

7. Sichelmäher nach Anspruch 6, **dadurch gekennzeichnet**, daß das Messer (1) von einer unterseitig offenen topfartigen Abdeckung (21) aufgenommen ist.

8. Sichelmäher nach Anspruch 7, **dadurch** gekennzeichnet, daß die seitliche Wandung (26) der Abdeckung (21) bis unter die Schnittebene des äußeren Schneidenabschnitts (8) reicht und den Umlaufkreis (27) des Messers (1) unter Bildung eines Ringspaltes (28) umschließt.

9. Sichelmäher nach Anspruch 7 oder 8, **dadurch gekennzeichnet**, daß die Abdeckung (21) einen nach innen weisenden unteren Rand aufweist.

10. Sichelmäher nach einem der Ansprüche 7 bis 9, **dadurch gekennzeichnet**, daß die Abdeckung (21) an ihrer Oberseite mit mindestens einer Entlüftungsöffnung (30) versehen ist.

11. Sichelmäher nach einem der Ansprüche 7 bis 10, **dadurch gekennzeichnet**, daß mindestens zwei nebeneinander angeordnete Aggregate mit jeweils einem innerhalb einer topfartigen Abdeckung umlaufenden Messer vorgesehen sind, wobei die Abdeckungen benachbarter Messer eine Öffnung zum Durchtritt des Mähgutes aufweisen.

12. Luftkissenmäher mit einem Messer nach einem der Ansprüche 1 bis 5.

13. Luftkissenmäher nach Anspruch 12, **dadurch gekennzeichnet**, daß das Messer von einer unterseitig offenen topfartigen Abdeckung (32) aufgenommen ist.

14. Luftkissenmäher nach Anspruch 13, **dadurch gekennzeichnet**, daß die seitliche Wandung der Abdeckung (32) bis unter die Schnittebene des äußeren Schneidenabschnitts (8) reicht und den Umlaufkreis (27) des Messers (1) unter Ausbildung eines Ringspalts (28) umschließt.

15. Luftkissenmäher nach Anspruch 13 oder 14, **dadurch gekennzeichnet**, daß die Abdeckung (32) einen nach innen weisenden unteren Rand (38) aufweist.

16. Luftkissenmäher nach einem der Ansprüche 13 bis 15, **dadurch gekennzeichnet**, daß in der Abdeckung (32) oberhalb des Messers eine Leitschaufel (33) angeordnet ist.

17. Nachrüstsatz für einen Sichelmäher mit einem Messer nach einem der Ansprüche 1 bis 5, aufweisend eine den Umlaufkreis des Messers unter Ausbildung eines Ringspaltes umschließende zylinderförmige Abdeckung (34) und Befestigungsmittel (35) zur Befestigung der Abdeckung an dem Gehäuse des Sichelmähers.

18. Nachrüstsatz für einen Sichelmäher nach Anspruch 17, **dadurch gekennzeichnet**, daß die Abdeckung (34) einen nach innen weisenden unteren Rand aufweist.

## Claims

1. A cutter for a rotary mower, with at least two blades (4, 4') which extend from a plane (9) of a hub part (3) providing a housing on a drive shaft of the rotary mower, the said plane (9) forming the median plane through the hub part (3), and which are provided on their (in the direction of rotation) leading longitudinal edges (5, 5') with cutting edges (6, 6') which, starting from the blade ends (7, 7'), extend as far as the hub part (3) of the cutter and which are so constructed in their marginal areas which are in front in the direction of rotation that they have an outer cutting edge partition (8, 8') adjacent to which there is a central cutting edge portion (10, 10') which rises above the plane (9) of the hub part (3) and merges into an inner cutting edge portion which falls into the plane (9) of the hub part (3), the (in the direction of rotation) rear longitudinal edges (16, 16') of the cutter blades extending substantially in or above the plane (9) of the hub part, the blades (4, 4') being in the region of the blade ends (7, 7') constructed as guide surfaces (36, 36') set obliquely in relation to the plane of rotation of the cutter and, starting from the (in the direction of rotation) leading longitudinal edges (5, 5') of the cutter blades (4, 4'), rise towards the rear longitudinal edges (16, 16'), the outer cutting edge portion (8, 8') being so profiled that it is below the plane (9) of the hub part (3), characterised in that in the region of the blade ends (7, 7') and in the direction of rotation, there are deflecting elements (17, 17'; 18, 18') which extend upwardly and downwardly from the cutter blades (4, 4').

2. A cutter according to claim 1, characterised in that the downwardly extending deflecting elements (18, 18') are set at right-angles on the plane of rotation (9) of the cutter and in that the upwardly extending deflecting elements (17, 17') are set to slope rearwardly in the direction of rotation and in relation to a plane which is at right-angles to the plane of rotation (9).

3. A cutter according to claim 1 or 2, characterised in that the bottom deflecting elements (18, 18') extend as far as the plane of intersection (12) of the outer cutting edge portions (8, 8').

4. A cutter according to one of claims 1 to 3, characterised in that the surfaces of the upper deflecting elements (17, 17') are larger than the surfaces of the bottom deflecting elements (18, 18').

5. A cutter according to one of claims 1 to 4, characterised in that the (in the direction of rotation) rear part (15) of the guide surfaces (36, 36') is inclined at a lesser angle than the front portion (14).

6. A rotary mower having at least one cutter according to claims 1 to 5.

7. A rotary mower according to claim 6, characterised in that the cutter (1) is housed by a pot-shaped cover (21) which is open on the under side.

8. A rotary mower according to claim 7, characterised in that the lateral walls (26) of the cover (21) extend to below the plane of intersection of the outer cutting edge portion (8) and enclose the circle (27) of rotation of the cutter (1), forming an annular gap (28).

9. A rotary mower according to claim 7 or 8, characterised in that the cover (21) has an inwardly directed bottom edge.

10. A rotary mower according to one of claims 7 to 9, characterised in that the cover (21) is provided with at least one vent aperture (30) on its upper side.

11. A rotary mower according to one of claims 7 to 10, characterised in that at least two adjacently disposed sub-assemblies are each provided with a cutter rotating within a pot-shaped cover, the covers of adjacent cutters having an opening to allow passage of the mowings.

12. A hover mower with a cutter according to one of claims 1 to 5.

13. A hover mower according to claim 12, characterised in that the cutter is housed by a pot-shaped cover (32) which is open on its under side.

14. A hover mower according to claim 13, characterised in that the lateral walls of the cover (32) extend to below the plane of intersection of the outer cutting edge portion (8) and enclose the circle (27) of rotation of the cutter (1), forming an annular gap (28).

15. A hover mower according to claim 13 or 14, characterised in that the cover (32) has an inwardly directed bottom edge (38).

16. A hover mower according to one of claims 13 to 15, characterised in that a guide blade (33) is disposed in the cover (32), above the cutter.

17. A retrofit kit for a rotary mower with a cutter according to one of claims 1 to 5, comprising a cylindrical cover (34) enclosing the circle of rotation of the cutter and forming an annular gap and also fixing means (35) for attaching the cover to the housing of the rotary mower.

18. A retrofit kit for a rotary mower according to claim 17, characterised in that the cover (34) has an inwardly directed bottom edge.

## Revendications

1. Lame pour une faucheuse, comprenant au moins deux ailes (4, 4'), qui s'étendent à partir d'un plan (9) d'une partie de moyeu (3) assurant la réception sur un arbre d'entraînement de la faucheuse, le plan (9) constituant le plan médian de la partie de moyeu (3), et qui sont pourvues, sur leurs arêtes longitudinales (5, 5') antérieures dans la direction de circulation, de tranchants (6, 6') qui s'étendent des extrémités (7, 7') des ailes jusqu'à la partie de moyeu (3) de la lame et qui sont, dans leurs régions de bord antérieures dans la direction de circulation, respectivement configurés de telle sorte qu'ils présentent une partie de tranchant extérieure (8, 8') à laquelle se raccorde une partie de tranchant médiane (10, 10'), montant au-delà du plan (9) de la partie de moyeu (3) et se raccordant à une partie de tranchant intérieure descendant dans le plan (9) de la partie de moyeu (3), les arêtes longitudinales (16, 16'), postérieures dans la direction de circulation, des ailes de lame s'étendant essentiellement dans ou au-dessus du plan (9) de la partie de moyeu, les ailes (4, 4') étant réalisées, dans la région des extrémités (7, 7') des ailes, sous forme de surfaces de guidage (36, 36'), inclinées par rapport au plan de circulation de la lame, qui possèdent une allure ascendante depuis les arêtes longitudinales (5, 5'), antérieures dans la direction de circulation, des ailes de lame (4, 4') en direction des arêtes longitudinales postérieures (16, 16'), et la partie de tranchant extérieure (8, 8') étant profilée de telle sorte qu'elle se trouve en dessous du plan (9) de la partie de moyeu (3), caractérisée en ce qu'il est prévu, dans la région des extrémités (7, 7') des ailes, après les tranchants (6, 6') dans la direction de circulation, des éléments déflecteurs (17, 17' ; 18, 18') s'étendant dans la direction longitudinale de la lame, qui se développent vers le haut et vers le bas à partir des ailes (4, 4').

2. Lame selon la revendication 1, caractérisée en ce que les éléments déflecteurs (18, 18') se développant vers le bas sont perpendiculaires au plan de circulation (9) de la lame, et en ce que les éléments déflecteurs (17, 17') se développant vers le haut sont inclinés vers l'arrière, dans la direction de circulation, par rapport à un plan perpendiculaire au plan de circulation (9).

3. Lame selon la revendication 1 ou 2, caractérisée en ce que les éléments déflecteurs inférieurs (18, 18') se développent jusqu'au plan de coupe (12) des parties de tranchant extérieures (8, 8').

4. Lame selon l'une quelconque des revendications 1 à 3, caractérisée en ce que les surfaces des éléments déflecteurs supérieurs (17, 17') sont plus grandes que celles des éléments déflecteurs inférieurs (18, 18').

5. Lame selon l'une quelconque des revendications 1 à 4, caractérisée en ce que la région arrière (15), dans la direction de circulation, des surfaces de guidage (36, 36') présente une plus faible pente que la région avant (14).

6. Faucheuse équipée d'au moins une lame selon l'une quelconque des revendications 1 à 5.

7. Faucheuse selon la revendication 6, caractérisée en ce que la lame (1) est reçue dans un cache (21) en forme de pot ouvert vers le bas.

8. Faucheuse selon la revendication 7, caractérisée en ce que la paroi latérale (26) du cache (21) s'étend jusqu'au plan de coupe de la partie de tranchant extérieure (8) et entoure le cercle de circulation (27) de la lame (1) en formant un passage annulaire (28).

9. Faucheuse selon la revendication 7 ou 8, caractérisée en ce que le cache (21) présente un bord inférieur dirigé vers l'intérieur.

10. Faucheuse selon l'une quelconque des revendications 7 à 9, caractérisée en ce que le cache (21) est pourvu sur le dessus d'au moins une ouverture d'évacuation d'air (30).

11. Faucheuse selon l'une quelconque des revendications 7 à 10, caractérisée en ce qu'il est prévu au moins deux groupes disposés en juxtaposition et pourvus chacun d'une lame circulant à l'intérieur d'un cache en forme de pot, les caches de lames voisines présentant une ouverture pour le passage de la tonte.

12. Tondeuse à coussin d'air équipée d'une lame selon l'une quelconque des revendications 1 à 5.

13. Tondeuse à coussin d'air selon la revendication 12, caractérisée en ce que la lame est reçue dans un cache (32) en forme de pot ouvert vers le bas.

14. Tondeuse à coussin d'air selon la revendication 13, caractérisée en ce que la paroi latérale du cache (32) s'étend jusqu'en dessous du plan de coupe de la partie de tranchant extérieure (8) et entoure le cercle de circulation (27) de la lame (1) en formant un passage annulaire (28).

15. Tondeuse à coussin d'air selon la revendication 13 ou 14, caractérisée en ce que le cache (32) présente un bord inférieur (38) dirigé vers l'intérieur.

16. Tondeuse à coussin d'air selon l'une quelconque des revendications 13 à 15, caractérisée en ce qu'une pale directrice (33) est disposée au-dessus de la lame dans le cache (32).

17. Lot de rattrapage pour une faucheuse équipée d'une lame selon l'une quelconque des revendications 1 à 5, comportant un cache de forme cylindrique (34) entourant le cercle de circulation de la lame en formant un passage annulaire, et des moyens de fixation (35) pour fixer le cache sur le carter de la faucheuse.

18. Lot de rattrapage pour une faucheuse selon la revendication 17, caractérisé en ce que le cache (34) présente un bord inférieur dirigé vers l'intérieur.
